Europäisches Patentamt

**European Patent Office**

**Office européen des brevets**

(19)

(11) Publication number: **0 180 306**
A2

# (12) EUROPEAN PATENT APPLICATION

(21) Application number: **85306181.0**

(22) Date of filing: **30.08.85**

(51) Int. Cl.⁴: **B 60 R 22/20**

(30) Priority: **31.08.84 GB 8422080**
**26.11.84 GB 8429788**

(43) Date of publication of application: **07.05.86**
**Bulletin 86/19**

(84) Designated Contracting States: **AT DE FR GB IT NL SE**

(71) Applicant: **ASE (UK) LIMITED, Norfolk Street, Carlisle Cumbria CA2 5HX (GB)**

(72) Inventor: **Alston, Brian Edward, 1 Howrigg Bank, Wigton Cumbria (GB)**
Inventor: **Anderson, Alexander Barrie, Westwoodside, Wigton Cumbria CA7 0LW (GB)**

(74) Representative: **Jones, Ian et al, POLLAK MERCER & TENCH High Holborn House 52-54 High Holborn, London WC1V 6RY (GB)**

(54) **Adjustable anchorage.**

(57) An adjustable anchorage for the belt of a vehicle seat belt system comprises a support for the belt mounted on a carriage, a track along which the carriage is selectively movable between predetermined positions and detent means releasably holding the carriage in the selected one of the predetermined positions. A single element (16; 56; 96) both carries the belt support (32; 97) and is pushed or otherwise manipulated to release the detent means (4, 19). Moreover, the detent means can be associated with latching means (7, 24; 53, 59) requiring to be unlatched before the carriage can move along the track, the latching means either latching the carriage to the track or latching the detent means.

A button (84) can enclose the detent means (4, 72) and is movable to effect release in a direction transverse to the detent means movement. Also, the track (2) has an end (110) at which the carriage can be assembled with it in operative relationship, and means (111) for closure of the track end to prevent subsequent removal of the carriage. The track can be provided by an integral part of the vehicle structure e. g. the B-post.

0180306

-1-

ADJUSTABLE ANCHORAGE

DESCRIPTION

This invention relates to an adjustable anchorage capable of use for example for the belt of a vehicle seat belt system.

The invention is concerned particularly, but not exclusively, with an adjustable anchorage for the upper end of the shoulder belt of a road vehicle seat belt system. Such a shoulder belt extends in use diagonally downwards from the anchorage across the torso of the user and may have its upper end secured to the vehicle by way of the anchorage. Alternatively, the belt may extend upwardly to the anchorage from a retractor, the anchorage providing a loop or slot through which the belt is guided.

The present invention relates to an adjustable anchorage for the belt of a vehicle seat belt system, the anchorage being of the kind comprising a support for the belt mounted on a carriage, a track along which the carriage is selectively movable between predetermined positions and detent means releasably holding the carriage in the selected one of the predetermined positions.

Known adjustable anchorages of this kind tend to be inconvenient to use, costly and complicated to manufacture and unreliable in operation. The present invention seeks to overcome these disadvantages.

The invention thus provides an anchorage of the kind described in which the detent means is operated indirectly, as by manual movement of a member in a direction different from the direction of movement of the detent means in the release direction. The manually movable member can be shaped so as to enclose and shelter the detent means from inadvertent release.

The invention also provides an anchorage of the kind described in which a preliminary operation has to be performed before release of the detent means. Thus, the detent means can be associated with latching means requiring to be unlatched before the detent means can be released for movement of the carriage along the track.

The latch means can for example normally act to hold a movable portion of the detent means against release movement relative to the carriage. The latch means can also act to latch the carriage to the track.

Preferably the latching means is biassed to its latching position, and the bias can advantageously be consequential on use of the seat belt.

The invention makes inadvertent release of the detent means very unlikely, so enhancing the security provided by the seat belt system under accident or emergency conditions. Thus release of the detent means may occur by pushing a control member and this could occur if the control member end were to be inadvertently struck during an accident, as by the head of the user of the seat belt system. Such inadvertent operation may be prevented in accordance with the invention by requiring a sliding or rotational movement of the control member or a member effecting operation of it.

The invention also provides an anchorage of the kind described in which the track is provided by an integral part of the vehicle structure.

The track can thus be provided for example by the

-3-

so-called B post at the rear of the front seat door aperture of a passenger car, the post being provided with a slot along which the carriage is guided, the slot being shaped to provide, or being associated with, detent formations constituting part of the detent means. Other suitable hollow or plate-like parts of the vehicle frame or structure can however be similarly modified to constitute the track.

Such an anchorage eliminates the complications involved in the provision of a separate track member, and its securement to the vehicle frame. Production is simplified and any risk of weakness in the fastener or securement means employed is avoided. The carriage may be fitted to the track as part of the vehicle original equipment but provision may be made for assembly of the carriage with the vehicle part providing the track subsequent to vehicle manufacture.

The invention also provides an anchorage of the kind described in which the track has an end at which the carriage can be assembled with the track in operative relationship, and means for closure of the track end to prevent subsequent removal of the carriage.

Such an anchorage facilitates both construction and assembly and is of particular utility when, as described above, the track is formed by an integral part of the vehicle structure. Where the track comprises a plate with a slot shaped to guide the carriage, the slot can open into an aperture at one end, conveniently the upper end, the aperture being large enough to admit the carriage for assembly with the track and being closable to trap the carriage in the track, as by means of a snap-fit closure member. Alternatively, and in particular when the plate is a separate item secured to the vehicle frame, the slot can have an open end through which the carriage is assembled, the end being preferably thereafter closed to retain the carriage. Assembly of the carriage with the track is thus an extremely simple operation.

The invention also provides an anchorage of the kind described in which the belt support is mounted on the carriage either fixedly or for swivelling movement, and in which the detent means includes a member requiring to be pushed into the anchorage relative to the carriage and against a spring bias to effect release of the detent means. The detent means member can be manually actuable by way of deformable portion of a cover for the belt support or the member can protrude through an aperture in the cover in the form of a push button for direct manual actuation. The release movement of the detent member is one that is conveniently effected, particularly where a latching means of the kind described above is incorporated and the member requires also to be turned or another part of the anchorage to be manipulated in order to unlatch the latching means. For example, rotation of the belt support or of a cover of the kind mentioned above may be required for unlatching.

The invention also provides an anchorage of the kind described having a member which serves to mount the belt support on the carriage and is also operable to release the detent means.

Such a member can conveniently have one end projecting outwardly for manual manipulation when release of the detent means is required, with the opposed end arranged to act on the detent means or to comprise a part of them, with the belt support carried between the ends; preferably so that the member can be operated without affecting the position of the belt support. The member can thus extend freely through an aperture in the belt support and be movable axially and/or angularly to effect release of a detent element, which could comprise for example a plunger formed as a part of the member. If the anchorage includes latching means requiring to be unlatched before the detent means can be released, unlatching can again be effected by movement of the member, and preferably the latching means are biassed by use of the belt into the latching position.

The invention will be more fully understood from the following illustrative description and from the accompanying drawings, in which:

Figure 1 is an exploded perspective view of a carriage of an adjustable shoulder anchorage for a vehicle seat belt in accordance with the invention;

Figures 2A and 2B are respectively a partial sectional plan view and a partial rear view of the anchorage of Figure 1;

Figures 3A and 3B correspond to Figures 2A and 2B but with the anchorage in a different condition;

Figures 4 and 5 correspond to Figure 2A but with the anchorage in respective further different conditions;

Figure 6 is a partial exploded perspective view of the carriage of a second anchorage in accordance with the invention;

Figure 7 is a partial cross-sectional plan view through the anchorage of Figure 6;

Figure 8 is an exploded perspective view of a fourth adjustable shoulder anchorage in accordance with the invention;

Figure 9 is a like view, with a part broken away, of the carriage of a fourth anchorage in accordance with the invention; and

Figure 10 is a perspective view of the anchorage of Figures 1-5 prior to assembly.

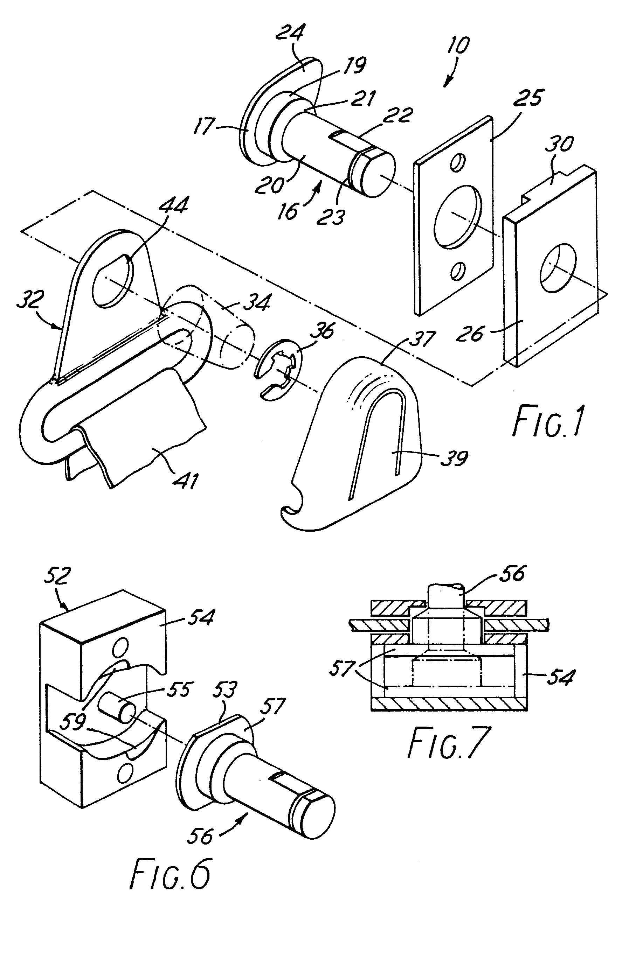

The adjustable shoulder anchorage of Figures 1-5 comprises a channel-shaped slide track 1 with a slot 2 formed in its centre web.

The track 1 is an integral part of, or if firmly secured to, the frame of a vehicle, with the slot 2 generally vertical, in the region of the shoulder of the occupant of a vehicle seat. The track 1 can for example be a portion of or secured to the pillar between the front and rear doors of a passenger vehicle, for use by the occupant of the adjacent front seat. The slot 2 has a plurality of aligned circular portions 4 joined by straight sided portions 5. One of the side webs 6 has slots 7 formed therein at spaced positions co-ordinated with the positions of the circular slot portions 4.

Selectively slidable along the slot 2 is a carriage 10 comprising a plunger 16 comprising an inner disc portion 17 from which extends a circular cylindrical portion 19 of a first diameter, a tapered or frustoconical intermediate portion 21, and a coaxial circular cylindrical outer end portion 20 of smaller diameter. The cylindrical portion 19 can be received in the slot portions 4 but not in the straight sided portion 5 which can however receive the cylindrical portion 20. A flat 22 is formed at the outer end of the portion 21 and adjacent this end a groove 23 extends around it. The disc portion 17 is circular over about three quarters of its periphery, which is completed by an outwardly extending lobe portion 24.

Outward movement of the plunger 16 on the pin 15 is limited by a reinforcing plate 25 secured to a slide plate 26 which overlies the reinforcing plate 25. The slide and reinforcing plates have aligned apertures, that in the reinforcing plate accommodating the cylindrical plunger portion 19 but that in the slide plate being of smaller diameter so that this portion

0180306

cannot pass through. The plates 25,26 are assembled together by means of screws extending through apertures 29 in the plate 25 into tapped holes in the plate 26, and are shaped so as to provide guide grooves between them along their vertical edges, as by means of a central upright thickened portion 30 of the slide plate, the grooves being shaped to receive the edges of the track 1 adjacent the slot 2.

Assembled on the outer end portion 20 of the plunger 16 are a running loop 32, a frusto-conical compression spring 34, and a circlip 36 which is received in the groove 23. A plastics cover 37, integrally formed with a pivotable press button portion 39, makes a snap fit on the running loop 32.

The running loop 32 is formed with a slot 40 through which a seat belt 41 extends from a retractor and the aperture 44 by which it is received on the plunger portion 20 is shaped for co-operation with the flat 22 so that the loop and the plunger turn together on the plunger axis.

In normal use, the illustrated anchorage has the plunger 16 in its outer position as shown in Figure A with the plunger portion 19 received in a selected one of the slot portions 4, due to the action of the spring 34 between the running loop 32 and the circlip 36.

The angular position of the disc portion 17 is such that the lobe portion 24 is received in the one of the side web slots 7 associated with the selected slot portion 4 as shown in Figure B. The carriage 10 is held against movement along the track by the reception of the plunger portion 19 in the slot portion 4 which constitute the detent means of the anchorage. Inadvertent axial displacement of the plunger to permit such movement, with the plunger portion 20 in the adjacent slot portion 5, is prevented by the engagement of the lobe portion 24 in the slot 7.

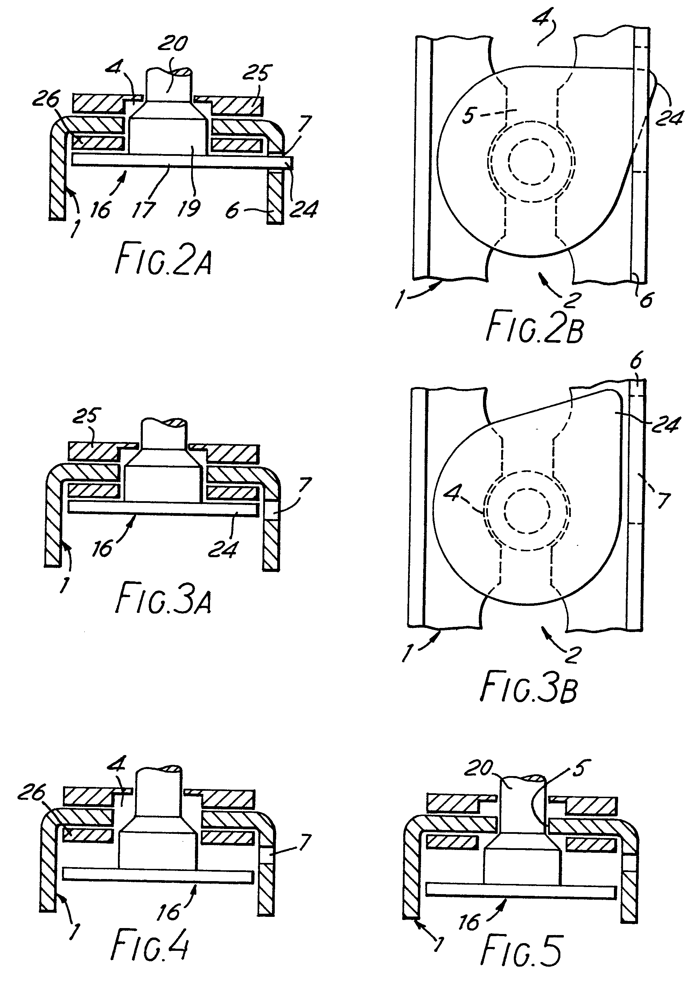

When it is desired to move the carriage 10 along the track 1, the latch constituted by the lobe portion 24 and the slot 7 is first released by rotation of the plunger 16, by manual rotation of the cover 37, to the position shown in Figures 3A and 3B, in which the disc portion lies wholly between the track side webs. The plunger 16 can then be pushed into the track 1, the running loop sliding on the flat 22, until the plunger portion 19 is free of the slot portion 4, as shown in Figure 4. The carriage 10 can then be moved along the track 1, with the plunger portion 20 in a track portion 5 as shown in Figure 5, until the plunger 16 is aligned, or approximately aligned with a different slot portion corresponding to a desired position of the loop 32 along the track. The plunger 16 is allowed to move outwardly through positions corresponding respectively to that of Figure 4 and to that of Figures 3A and 3B, the plunger being centred by the tapered plunger portion 21. The plunger 16 is then turned axially to reach the latched condition of Figures 2A and 2B.

In the normal use position of the anchorage, the plunger 16 is biassed by the weight of the belt 41 and by tension applied to it by the user into the latched angular position shown in Figures 2A and 2B. The plunger 16 will consequently assume its latched angular position, after axial movement to engage the portion 19 into a new slot portion 4, in response to normal tension in the belt 41. Instead or as well a spring bias can be applied to the plunger to urge it to rotate to the latched position. In any event, a limit to the angular movement of the plunger 16 into the latched position is set by the engagement of the edge of the lobe portion 24 with that of the slot 7.

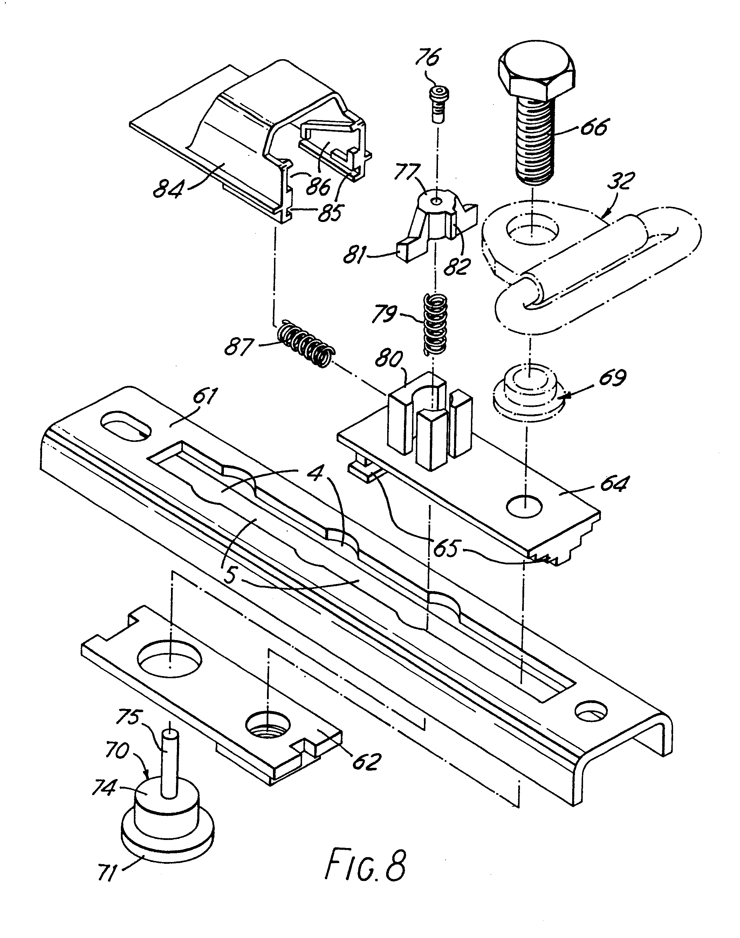

The adjustable shoulder anchorage of Figures 6 and 7 resembles that of Figures 1-5 except in the nature of the latch means, which act between the plunger and the carriage. The anchorage comprises a slide plate, which is similar to the slide plate 1 of Figures 1-5 except that the slots 7 are not provided, and a carriage selectively slidable along the slot of the slide plate, and comprising a generally rectangular body 52 provided with a recess opening from one major face 54. The body 52 has secured thereto, or is shaped to provide, a circular cylindrical guide pin 55 projecting centrally from the floor of the recess at right angles to the face 54. A plunger 56 has a central bore by which it is slidably received on the pin 55. The plunger 56 comprises an inner disc portion 57 from which extend portions corresponding in shape and function to the portions 19-21 of the plunger 16. The carriage of Figures 6 and 7 likewise includes reinforcing and slide plates which can be identical to the plates 25,16, and the plunger 56 can carry a running loop, a compression spring, a circlip and a cover which may be identical to equivalent parts of Figures 1-5.

The use and operation of the anchorage of Figures 6 and 7 is also generally equivalent to that of Figures 1-5. Thus, in normal use, the anchorage of Figures 6 and 7 has the plunger 56 in its outer position as indicated in solid line in Figure 7 and is released for movement along the slide plate by inward movement of the plunger. Before this can be done a latch device requires to be released. The latch device is constituted by diametrically opposed flat portions 53 at the edge of the plunger portion 57 and by steps 59 formed in the wall of the body defining the recess for the plunger. The steps 59 are diametrically opposed across the pin 55 and provide surfaces parallel to the face 54 of the block which are limited by stop surfaces perpendicular to the face.

In the normal use position of the anchorage, the plunger 56 is biassed by the weight of the belt 41 and by tension applied to it by the user into an angular position such that the inner face of the portion 57 rests on the steps 59 and the flat portions 53 engage the stop surfaces. The plunger 56 must then be turned on its axis manually before the plunger can be depressed to permit sliding of the carriage along the slot. The plunger 56 will assume its latched angular position after axial movement to engage the detent means of the anchorage.

The anchorage shown in Figure 8 comprises a channel-shaped track member 61 providing a slot in its centre web shaped in the same way as the slot 2 of Figures 1-5. The anchorage includes a carriage slidable along the slot and comprising inner and outer plates 62 and 64, of which the outer or slide plate is formed on its inner side with projections 65 by which it is spaced from the inner or reinforcing plate at the edges, where the plates form guide grooves receiving the edges of the centre web adjacent the slot 2.

The screw-threaded end of a headed bolt 66 extends through a lower aperture in the outer plate 64 into an aligned tapped boss 67 provided on the inner plate, so as to hold the two plates together. The bolt shank mounts a running loop, which can correspond to the running loop 32, adjacent the head, and a stepped washer 69 is received between the running loop and the outer carriage plate to permit free rotation of the loop.

A detent plunger 70, extending through aligned apertures in the two carriage plates 62 and 64, has an innermost circular disc portion 71, from which extends a cylindrical portion 72 which merges through a frusto-conical portion 74 with a reduced diameter outer shaft portion 75. The circular disc portion 71 retains the plunger against outward movement from the carriage, and the cylindrical and frusto-conical portions 72 and 74 co-operate with the plate apertures and with the slot in just the same way as the plunger portions 19,20,21 co-operate with the carriage plate apertures and slot portions of Figures 1-5.

The outer shaft portion 75 of the plunger 70 has a tapped axial bore at its outer end for receiving a bolt 76 by which an actuator 77 is retained on the shaft portion.  A compression spring 79 surrounding the shaft portion 77 acts between the actuator and the outer plate as an actuator return spring, which urges the plunger into its position of normal use, in which the cylindrical portion 72 is received in a selected slot portion 4, after movement of the carriage along the track.

The actuator 77 is guided for movement with the plunger 70 relative to the carriage by a guide structure 80 projecting outwardly of the outer carriage plate 64. The actuator comprises a sleeve having guide arms 81 projecting from it to either side of the carriage outwardly through opposed slots formed in the guide structure.  The sleeve also has an axially extending rib 82 between the guide arms and received in a further slot in the guide structure.

Slidably received on the outer carriage plate is an operating button 84 in the form of a hollow member having a generally channel-shaped portion open at its lower end but closed by a transverse wall above.  The side walls of the channel-shaped portion have grooves 85 at their lower edges receiving the edges of the outer plate 64.  Between the lower edges and the centre wall, the side walls have projections forming guide or ramp portions engageable with the ends of the actuator arms 81 and defining tracks 86 for these ends which is inclined to both the plunger axis and the direction of movement of the carriage.  A second compression spring 87 . is seated on the transverse wall and on the guide structure 80 so as to act between the button and the guide structure as a button return spring.  The arm ends are trapped within the inclined tracks 86 on the button side walls to limit the movement of the button on the carriage side plate.

In the normal position of use, the plunger 70 is held in its outer position, with the cylindrical portion 72 received in a slot portion 5, by the spring 79. This position corresponds to the uppermost position of the button 84, with the actuator arms 81 at the lower and outer ends of the tracks 86. When it is desired to move the carriage along the track, the button 84 is moved downwardly against the springs 79 and 87 by finger pressure applied between the transverse button wall and the carriage guide structure 80. The ramped track surfaces within the button 84 then act on the actuator arms 81 to move the plunger inwardly to its release position so that the carriage can be moved to a new desired position. When the plunger 70 is again in registration with a slot portion 5, release of the finger pressure between the button 84 and the guide structure 80 permits return of the plunger to effect releasable securement of the carriage in the desired position.

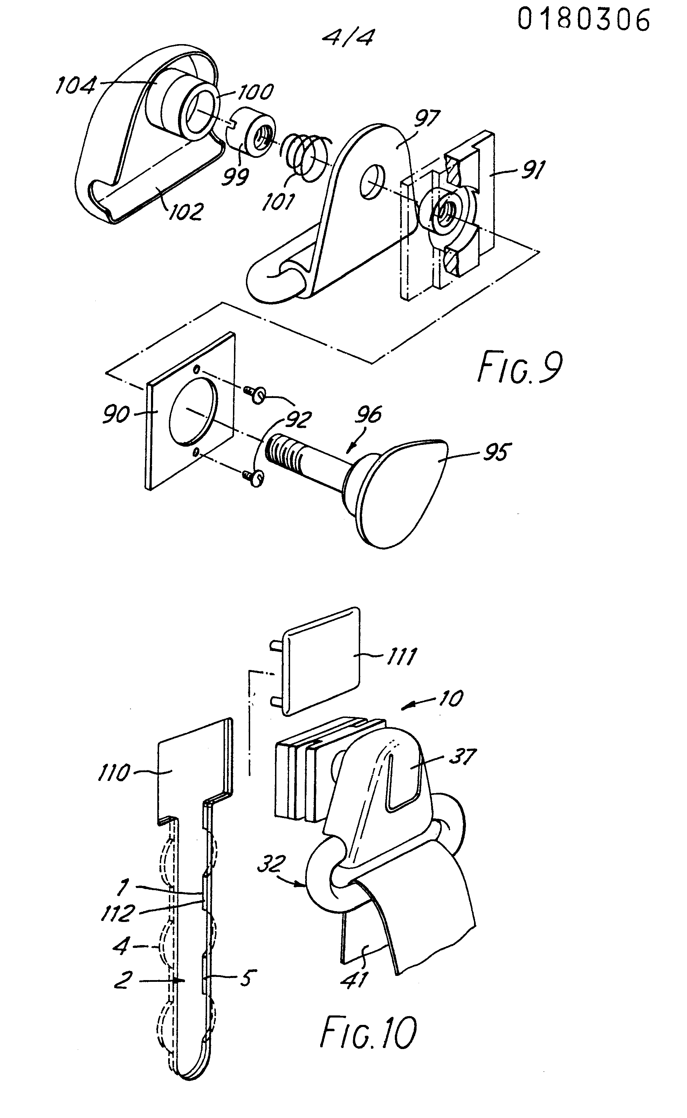

The carriage of the fourth anchorage, as shown in Figure 9, has inner and outer or reinforcing and slide plates 90 and 91 connected together by bolts 92 and shaped to co-operate a track having a slot 2 in the same way as do the plates 25 and 30 of Figures 1-5. A plunger 96 extends through aligned apertures in the plates 90 and 91 and is shaped and biassed to co-operate with them and with the track slot portions 4 and 5 as in the anchorages previously described. The plunger 96 may include an end disc portion 95 provided with a lobe for reception in slots in the track corresponding to the slots 7 of Figures 1-5, and may then be rotationally biassed as described in connection with Figures 1-5.

The plunger 96 has an outwardly protruding plain portion on which a running loop 97 is rotatably received and a screw-thread outer end received in a nut 99 secured to a push button 100. A coiled compression spring 101 is received between the nut 99 and the running loop 97. A plastics cover 102 makes a snap fit on the running loop and is apertured at 104 to receive the button 100 therethrough.

As will be evident, the carriage of Figure 9 can be moved along the slide track 1 after the push button 100 is depressed relative to the cover 102, after having first been turned if the latch means constituted by the lobed disc 95 and the track slots 7 is included.

Assembly of the carriage 10 of the anchorage of Figures 1-5 with the track 1 is illustrated in Figure 10 and a like technique can be employed for the carriages of Figures 6-9. In Figure 10, the slot 2 of the plate 1 is shown as having at its upper end an enlarged portion 110 through which the carriage 10 can be moved into its operative relation with the track. Assembly thus comprises insertion of the carriage 10 into the slot portion 110 followed by downward movement, with the plunger 16 depressed, to bring the edges of the slot 2 in the grooves of the carriage. The slot portion 50 may be closed after insertion of the carriage 10 by a closure element for example a panel 111 making a snap fit in the portion 110.

The plate provided with the track 1 may be covered by a decorative layer 112, which need be formed only with a parallel sided slot corresponding to the slot portions 5, and the panel 111 may have a corresponding decorative layer.

The plate providing the track 1 is here constituted by the wall of a pillar forming an integral part of the vehicle but a separate plate can be provided and fastened to the vehicle frame. Although it is preferred for strength purposes to provide the slot portion 50 in such a separate plate, the slot 2 could open from the upper edge of the plate. A closure element for closing the open end of the slot after assembly is preferably provided.

A channel-shaped track member provided with the slots 7 in its side webs could also be constituted as an integral vehicle part, and the carriage of the anchorage can be assembled with it in the ways described with reference to Figure 10.

It will be understood that the invention can be embodied in a variety of ways other than as specifically described. For example the slot 2 of the slide track 1 can be parallel-sided and separate spaced detent apertures can be provided adjacent one or both sides, the plunger then being suitably modified. Again, the plunger disc portion can be modified to have a diametrically opposed pair of the lobe portions 24, receivable in slots in each of the track side webs.

0180306

CLAIMS

1. An adjustable belt anchorage for a vehicle seat belt system, the anchorage comprising a belt support mounted on a carriage selectively movable along a track between positions at which the carriage can be releasably retained by detent means, the belt support being mounted on the carriage by an element of the detent means operable to release the detent means.

2. An anchorage as claimed in claim 1 having latch means requiring to be unlatched prior to movement of the carriage by operation of the detent means element.

3. An adjustable belt anchorage for a vehicle seat belt system, the anchorage comprising a belt support mounted on a carriage selectively movable along a track between positions at which the carriage can be releasably retained by detent means, latch means being provided which require to be unlatched to allow the movement of the carriage along the track.

4. An anchorage as claimed in claim 2 or 3 wherein the latch means (7,24; 53,59) is arranged to be urged to the operative condition thereof by use of the belt.

5. An anchorage as claimed in claim 2, 3 or 4 wherein the latch means (53,59) is operative to latch the detent means against release movement.

6. An anchorage as claimed in claim 2, 3, 4 or 5 wherein the latch means (7,24) is operative to latch the carriage (10) to the track (1).

7. An anchorage as claimed in any one of claims 2-6 wherein the latch means is unlatchable by rotation of the belt support and the detent means is releasable by belt support movement in the direction of rotation.

8. An adjustable belt anchorage for a vehicle seat belt system, the anchorage comprising a belt support mounted on a carriage selectively movable along a track between positions at which the carriage can be releasably retained by detent means, and an operating member manually movable on the carriage to effect release of the detent means, the operating member being movable in a direction different from that of the detent means release movement.

9. An anchorage as claimed in claim 9 wherein the operating member shields the detent means to limit or prevent engagement thereof to effect the release.

10. An adjustable belt anchorage for a vehicle seat belt system, the anchorage comprising a belt support mounted on a carriage selectively movable along a track between positions at which the carriage can be releasably retained by detent means, the track being constituted by a slot in a fixed track member, the slot having at an end thereof a widened portion through which the carriage can be assembled with the track.

11. An anchorage as claimed in claim 10 having a closure member receivable in the widened slot portion after assembly to prevent removal of the carriage.

12. A vehicle having therein a seat belt system, the system comprising an adjustable belt anchorage with a belt support mounted on a carriage movable along track to a selected position therealong at which the carriage is releasably retained by detent means, the track being constituted by an integral part of the vehicle.

13. A vehicle as claimed in claim 12 wherein the track is constituted by a slot extending in a general upright direction in the B-post of the vehicle.

FIG.1

FIG.6

FIG.7

0180306

FIG.2A

FIG.2B

FIG.3A

FIG.3B

FIG.4

FIG.5

0180306

FIG.8

0180306

FIG.9

FIG.10